(19) **Europäisches Patentamt**
**European Patent Office**
**Office européen des brevets**

(11) **EP 2 580 441 B1**

(12) **EUROPEAN PATENT SPECIFICATION**

(45) Date of publication and mention
of the grant of the patent:
**31.07.2019 Bulletin 2019/31**

(51) Int Cl.:
*F02B 33/00* *(2006.01)*     *F02D 23/00* *(2006.01)*
*F02D 29/06* *(2006.01)*     *F02D 9/02* *(2006.01)*

(21) Application number: **11792826.7**

(86) International application number:
**PCT/US2011/033404**

(22) Date of filing: **21.04.2011**

(87) International publication number:
**WO 2011/156056 (15.12.2011 Gazette 2011/50)**

(54) **SYSTEM AND METHOD FOR THROTTLE-LOSS RECOVERY AND ELECTRICAL POWER GENERATION IN A SPARK-IGNITION ENGINE**

SYSTEM UND VERFAHREN FÜR DROSSELVERLUSTAUSGLEICH UND STROMERZEUGUNG IN EINEM OTTOMOTOR

SYSTÈME ET PROCÉDÉ SERVANT À RÉCUPÉRER LES PERTES D'ÉNERGIE DUES AU PAPILLON DES GAZ ET GÉNÉRATION DE PUISSANCE ÉLECTRIQUE DANS UN MOTEUR À ÉTINCELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2010 US 353403 P**

(43) Date of publication of application:
**17.04.2013 Bulletin 2013/16**

(73) Proprietor: **Garrett Transportation I Inc.**
**Torrance, CA 90504 (US)**

(72) Inventors:
• **BERESEWICZ, Patrick, A.**
**La Mirada, CA 90638 (US)**

• **GUIDRY, Mike**
**Redondo Beach, CA 90277 (US)**
• **NAGARJAN, Karthik, S.**
**Morristown, NJ 07962-2245 (US)**

(74) Representative: **LKGLOBAL**
**Lorenz & Kopf PartG mbB Patentanwälte**
**Brienner Straße 11**
**80333 München (DE)**

(56) References cited:
EP-A1- 1 462 629     EP-A1- 2 083 154
WO-A1-96/04487     CA-A1- 2 605 310
JP-A- 2005 188 348     JP-A- 2006 105 075
JP-A- 2006 214 325     KR-A- 20060 074 848
US-A- 5 394 848     US-A1- 2002 089 310

EP 2 580 441 B1

**Description**

BACKGROUND OF THE INVENTION

This application relates generally to spark-ignition (SI) engines, and more particularly relates to systems and methods for recovering energy that would otherwise be lost in a conventional throttle in the air intake system and for converting that recovered energy to electrical power that can be usefully employed for other purposes.

On SI engines, control of engine torque output has historically been accomplished by "throttling" the intake air charge entering the engine cylinders by using a throttling valve. When set at a partially closed position to reduce engine torque to some less-than-maximum level, the throttle expands the air passing through it to reduce the intake air density entering the cylinders. To maintain the engine air/fuel ratio within the desired range, the fueling rate is reduced by the engine controller to match the reduction in air density, and engine torque output is thus reduced to the desired level.

When a throttle is nearly fully open at high loads, it poses little or no restriction to the intake air flow. However, when operating with a partially closed throttle, the SI engine suffers from a significant efficiency loss that can be directly linked to the use of a throttle to control the engine torque output. A partially closed throttle executes the desired air flow density reduction for torque control via a pressure reduction to the flow. With a partially closed throttle, the low-pressure intake air charge acts on the piston area during the intake stroke to create what is known as an intake pumping loss, which is largely responsible for the drop in the SI engine's efficiency rating at part-throttle. In simple terms, the intake pumping loss is roughly equivalent to the amount of energy the engine needs to expend to pull the intake air through the throttle. A standard throttle has no mechanism to extract the energy from the change in enthalpy of the flow passing through it, so none of this energy is recovered.

Another source of power train inefficiency is accessory drive parasitic losses. Alternators, power steering pumps, fuel pumps, oil pumps, water pumps, air conditioning compressors, and the like, have traditionally all been contributors toward parasitic losses in that they directly pulled power from the engine crankshaft via an accessory drive belt or gear train to perform their intended function (pump, pressurize, circulate, generate, etc.). In recent years, more pointed efforts have been made to improve the efficiency of these devices, and some, such as water pumps, fuel pumps, oil pumps, and power steering pumps, have also started to be converted to electric drive in an attempt to improve their under-hood packaging as well as reduce the net power they demand from the crankshaft over their operating duty cycle. The result of this trend to transition these accessory devices to electric drive is that the power demands on the vehicle electrical system and alternator, which has already been steadily increasing for safety, comfort and "infotainment" needs, is increasing even further. The alternator, which is typically responsible for maintaining an adequate state of charge on the vehicle's battery under these additional electrical loads, continues to draw its power from the engine's crankshaft. Unfortunately, the typical production alternator today still suffers from a rather low efficiency level of 50-65% even with implementation of various efficiency improvements, meaning that the crankshaft must supply the alternator's rotor mechanical power which is 1.5 to 2.0 times what the alternator needs to output electrically.

With respect to traditional SI engine design, it would be highly beneficial from the standpoint of part-throttle efficiency improvement to be able to incorporate a device or system that would be able to capture the wasted energy from the change in enthalpy of the air flow that passes through the throttle, and using that energy to perform useful work. Of added benefit would be a system that did so by electrical means, thus simultaneously helping fill the modern vehicle's ever-increasing need for electrical power.

Over the years, numerous throttle loss recovering systems of various types and executions have been proposed for SI engines. One system of particular interest is a throttle loss recovering turbine generator system. This system uses a turbine to perform the part-load intake air expansion process while simultaneously extracting energy from that same flow. The turbine is made to drive a generator, creating electrical power that is merged into the vehicle's electrical system to supplement or displace electrical power supplied by the alternator. Displacing electrical power supplied by the inherently inefficient alternator results in a multiplying effect on the power put back into the crankshaft, and thus a commensurately larger engine efficiency improvement may be obtained. US5394848 discloses a throttle loss recovery system using a free-floating (fix-geometry) turbine coupled to a generator, a by-pass with a by-pass valve, and a throttle valve positioned upstream of the turbine in series. EP1462629A1 discloses a throttle loss recovery system using a compressor coupled to a generator, a by-pass with a by-pass valve, and a throttle valve positioned downstream of the compressor in series. EP2083154A1 discloses a throttle loss recovery system using a VNT turbine coupled to a generator and a throttle valve in series with the turbine. WO96/04487A1 discloses a throttle loss recovery system using a VNT turbine coupled to a generator, a by-pass with a by-pass valve. And NO throttle valve.

BRIEF SUMMARY OF THE DISCLOSURE

The present disclosure describes various throttle loss recovery (TLR) systems and associated control methods for controlling the generator load and the valving of the TLR system. The control methods aim to enlist the generator to serve one or more loads only when it is efficient to do so. In particular, the generator is controlled so that it supplies electrical power to the load(s) only when the generator speed is above a predetermined minimum speed threshold. The control methods also aim to prevent any overspeed excursions of the turbine/generator assembly. The present disclosure describes TLR systems employing a variable nozzle turbine (VNT) as well as systems employing a free-floating (non-variable) turbine. A bypass passage and associated bypass valve are arranged for allowing air to bypass the turbine under certain operating conditions, and the amount of air bypassed around the turbine can be varied. In some embodiments described herein, there is also a series throttle valve arranged either upstream or downstream of the turbine. The disclosed control methods include various algorithms for controlling the bypass valve, the VNT (when present), and the throttle valve (when present) under various engine operating conditions and scenarios.

In one aspect of the present disclosure, there is described a method for controlling a TLR system of the above-described type. The method comprises the steps of:

> providing a rectifier, a filter, a speed detector for detecting generator speed, and a pulse width modulation (PWM) and over-voltage controller between the generator and a load served by the generator such that AC electrical power generated by the generator is rectified and filtered into DC current, is over-voltage controlled, and is supplied to the load via the PWM controller;
> predefining an electrical power generation zone bounded on one side by a predefined minimum generator speed threshold $\omega_{min}$ and on an opposite side by a predefined maximum generator speed threshold $\omega_{max}$; and
> configuring the PWM controller such that when the TLR system is activated a duty cycle of the PWM controller is equal to zero when generator speed $\omega$ is less than $\omega_{min}$, 100% when $\omega$ is greater than $\omega_{max}$, and $F$ when $\omega$ is within the electrical power generation zone, where $F$ is a non-linear function of $\omega$, increasing with increasing $\omega$, and is greater than zero but less than 100%.

In some embodiments, the PWM controller is configured to achieve at least one predefined power generation target $T_1$ within the electrical power generation zone, wherein $T_1$ is defined by a predefined % duty cycle value $F_1$ at a predefined value of speed $\omega_1$

The PWM controller can be configured to achieve at least two predefined power generation targets $T_1$ and $T_2$ within the electrical power generation zone, wherein $T_1$ is defined by a predefined % duty cycle value $F_1$ at a predefined value of speed $\omega_1$ and $T_2$ is defined by a predefined % duty cycle value $F_2$ at a predefined value of speed $\omega_2$.

The PWM duty cycle F advantageously is proportional to $\omega^n$, where $n$ is an integer or non-integer greater than 1. In one embodiment $n$ equals 2. In another embodiment $n$ equals 3.

In some embodiments the TLR system includes a bypass passage for bypassing the turbine, a bypass valve controllable to regulate flow through the bypass passage, and a throttle valve in series with the turbine for regulating flow to the engine. In such embodiments the method further comprises the step of deactivating the TLR system when electrical power generation is not required by:

> setting the PWM controller's duty cycle to 100% so as to effectively brake the generator;
> opening the bypass valve sufficiently to prevent any significant pressure drop across the bypass valve; and
> controlling engine air flow by controlling the throttle valve.

In some embodiments of the TLR system, the turbine comprises a low-leakage variable-nozzle turbine (VNT) that is controllable between fully closed and fully open positions. With such a low-leakage VNT, the flow rate through the VNT at the fully closed position is less than a required engine idle airflow rate, and therefore the series throttle is not essential and can be omitted if desired. In these embodiments, the method further comprises the step of deactivating the TLR system when electrical power generation is not required by:

> setting the PWM controller's duty cycle to 100% so as to effectively brake the generator;
> fully closing the VNT; and
> controlling engine air flow by controlling the bypass valve.

Various other control algorithms are further described herein in the detailed description with reference to the accompanying drawings.

BRIEF DESCRIPTION OF THE SEVERAL VIEWS OF THE DRAWING(S)

Having thus described the present disclosure in general terms, reference will now be made to the accompanying drawings, which are not necessarily drawn to scale, and wherein:

> FIG. 1 depicts a throttle-loss recovery system and associated SI engine to which load control methods in accordance with the invention are applicable;
>
> FIG. 2 depicts another throttle-loss recovery system and associated SI engine to which load control methods in accordance with the invention are applicable;
>
> FIG. 3 depicts a further throttle-loss recovery system and associated SI engine to which load control methods in accordance with the invention are applicable;

FIG. 4 depicts yet another throttle-loss recovery system and associated SI engine to which load control methods in accordance with the invention are applicable;

FIG. 5 depicts a still further throttle-loss recovery system and associated SI engine to which load control methods in accordance with the invention are applicable;

FIG. 6 depicts a load control algorithm in accordance with one embodiment of the invention, for controlling the generator load under various engine operating conditions;

FIG. 7 illustrates an exemplary load demand scenario for an engine/TLR system in accordance with the invention;

FIG. 8 illustrates the state of the TLR system having a high-leakage VNT when the TLR system is deactivated, in accordance with the invention;

FIG. 9 illustrates the state of the TLR system having a low-leakage VNT when the TLR system is deactivated, in accordance with the invention;

FIG. 10 illustrates the state of the TLR system having free-floating turbine when the TLR system is deactivated, in accordance with the invention;

FIG. 11 is similar to FIG. 7 and illustrates the state of the TLR system at various engine operating conditions corresponding to various times 1, 2, 3, 4, and 7 during the exemplary load demand scenario, for a TLR system having a high-leakage VNT in accordance with the invention;

FIG. 12 is similar to FIG. 11 but applies to a TLR system having a low-leakage VNT in accordance with the invention;

FIG. 13 is similar to FIG. 11 but applies to a TLR system having a free-floating turbine in accordance with the invention;

FIG. 14 illustrates a valve control algorithm that can be implemented specifically for positive-going (increasing load) engine airflow transitions that may provide improved throttle response in off-idle through mid-load operating modes, in accordance with the invention; and

FIG. 15 depicts an optional air valve-related generator overspeed control algorithm that may be chosen to be executed during certain high-flow rapid throttle-lift conditions in accordance with the invention.

DETAILED DESCRIPTION OF THE DRAWINGS

The present invention now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

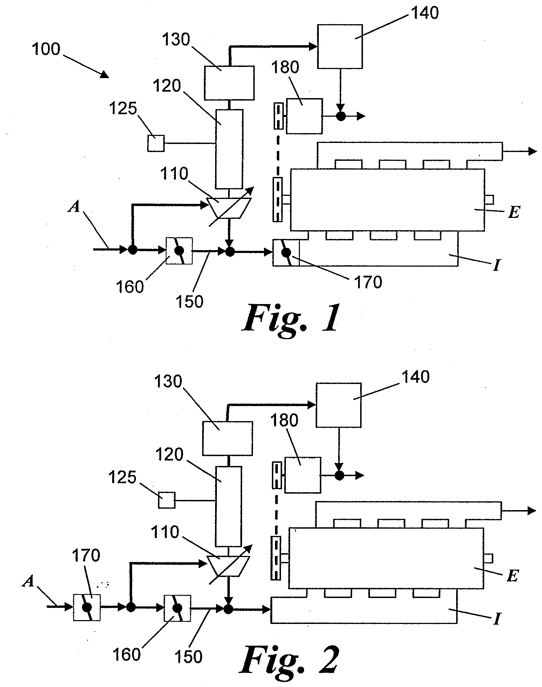

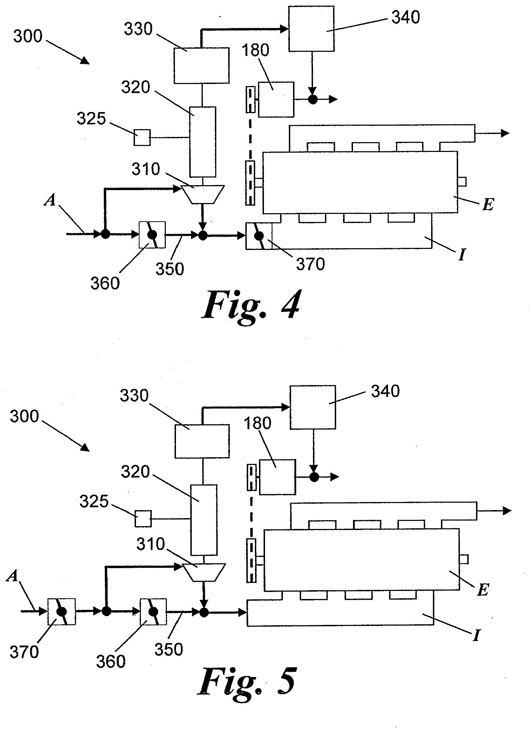

Two general configurations or classifications of turbine generator throttle loss recovery (TLR) systems are described in this disclosure. Both of these general configurations have a turbine and a bypass valve, but to drive the generator one configuration (FIGS. 1 through 3) has a variable nozzle turbine (VNT) while the other (FIGS. 4 and 5) has a free-floating (i.e., fixed-geometry) turbine. Within each of these two general configurations, those that incorporate throttle valves are furthermore classified into those that have the throttle valve located "upstream" and those that have the throttle valve located "downstream" of the turbine and bypass valve. This disclosure describes methods used to control all of these various configurations. It describes both the control methodology used to govern the air flow passing through the various valves of the system, as well as generator electrical load control methods that regulate the level of electric power production and also act as a generator overspeed control.

The embodiment shown in FIG. 1, which employs a VNT with a downstream series throttle valve, has been prototyped on a demonstrator vehicle and has been found to provide good electrical power extraction while maintaining normal vehicle driveability. Peak engine horsepower production was unaffected. Icing of the down-stream throttle has not been an issue.

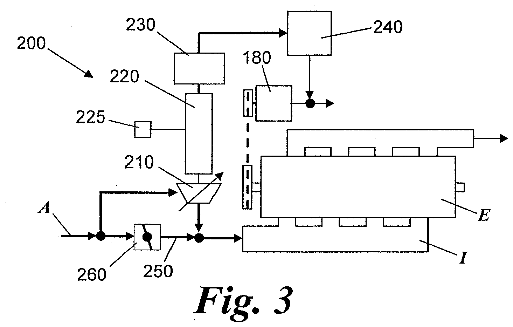

Within the general classification of TLR systems employing a VNT, the present disclosure further classifies such systems into those that have a "low-leakage VNT" and those that have a "high-leakage VNT." A "low-leakage VNT" is one that has a sufficiently low air leakage rate through the VNT mechanism when fully closed such that the VNT is able to control engine idle speed without the use of a throttle valve placed in series with the turbine, so the throttle valve may be eliminated in these system configurations (see, e.g., FIG. 3) if desired. Therefore, in the interest of simplification and brevity, the present disclosure illustrates TLR systems having low-leakage VNT turbines with no series throttle valve, but it should be understood that inclusion of a series throttle valve is an option in these systems.

A "high-leakage VNT" is one whose air leakage rate when fully closed is too great for adequate engine idle control (e.g., FIGS. 1 and 2). For systems having a high-leakage VNT, as well as configurations having a free-floating turbine (FIGS. 4 and 5) that do not control air flow rate, a throttle valve placed in series with the turbine, either upstream or downstream thereof, is necessary for idle control.

As illustrated in FIG. 1, an internal combustion engine *E* is shown with an associated TLR system **100**. The TLR system **100** includes a high-leakage VNT turbine **110** coupled to an electrical generator **120** such that the turbine drives the generator to rotate to produce electrical power under certain engine operating conditions as further described below. AC electrical power generated by the generator **120** is fed to a rectifier/filter **130** that rectifies the AC current to produce DC current and filters the current and supplies it to a pulse width modulated (PWM) controller **140**. The operation of the PWM controller is further described below. A speed detector **125** associated with the rectifier/filter and PWM controller senses the rotational speed $\omega$ of the generator **120**. The PWM controller **140** includes an associated over-voltage controller for preventing excessive voltage from being supplied to the load(s) served by the generator **120**. Although FIG. 1 illustrates the speed detector **125**, the rectifier/filter **130**, and the PWM and over-voltage controller **140** as separate items, some or all of these components can be housed in a common housing or box if desired.

The TLR system **100** further includes a bypass passage **150** arranged for bypassing the VNT **110**. A bypass valve **160** is disposed in or associated with the bypass passage **150** and is controllable between closed, open, and partially open positions so as to regulate flow through the bypass passage **150**. When the bypass valve **160** is closed, all incoming air (represented by arrow *A*) must pass through the VNT **110**. When the bypass valve **160** is partially open or fully open, some of the incoming air bypasses the VNT via the bypass passage **150** and bypass valve **160**. The system also includes a throttle valve **170** placed downstream of and in series with the VNT **110** for regulating air flow into the intake *I* of the engine *E*.

The system **100** illustrated in FIG. 2 is generally similar to that of FIG. 1, except that the throttle valve **170** is placed upstream of the VNT.

FIG. 3 depicts a TLR system **200** that is generally similar to that of FIGS. 1 and 2, except that instead of employing a high-leakage VNT, the system **200** employs a low-leakage VNT **210**. As a consequence, a series throttle valve is not essential and thus has been omitted. In other respects, the system **200** is substantially like the previously described systems **100**. Thus, the system includes a generator **220**, a speed detector **225**, a rectifier/filter **230**, a PWM and over-voltage controller **240**, and a bypass passage **250** and associated bypass valve **260**. Operation of these components is similar to that of their counterparts in the previously described systems.

FIGS. 4 and 5 depict a TLR system **300** that employs a free-floating turbine (FFT) **310** instead of a VNT. In other respects, the system configuration in FIG. 4 is the same as that in FIG. 1, and the configuration in FIG. 5 is the same as that in FIG. 2. Thus, the system **300** includes generator **320**, a speed detector **325**, a rectifier/filter **330**, a PWM and over-voltage controller **340**, a bypass passage **350** and associated bypass valve **360**, and a series throttle valve **370**. Operation of these components is similar to that of their counterparts in the previously described systems of FIGS. 1 and 2. As noted, the throttle valve **370** is essential in the system **300** because the free-floating turbine has a fixed geometry and thus cannot regulate air flow.

In the systems of FIGS 1 through 5, the generator **120**, **220**, **320** (and associated rectifier/filter and PWM controller) serves to supplement or displace electrical power provided by the alternator **180** to electrical loads such as a battery (not shown in the figures) and various other electrical loads (also not shown in the figures). However, as noted further herein, in other embodiments the generator can serve additional and/or different loads than the alternator, and in some applications the alternator can be omitted altogether.

Load Control Algorithm

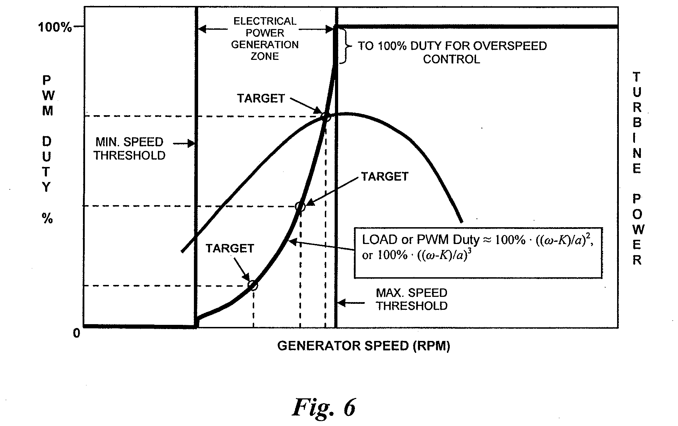

With reference to FIG. 6, a load control algorithm for electrical power production by the generator is illustrated, in accordance with one embodiment of the invention. The algorithm is implemented in the PWM controller **140** and is based on applying a non-linear (e.g., a second- or third-order exponential) electrical load (PWM duty cycle) with respect to generator speed, tailored for the engine-TLR system characteristics such that one or more selected power generation targets are achieved within the electrical power generation zone. The electrical power generation zone is bounded on the low side by a minimum generator speed threshold $\omega_{min}$ below which the PWM duty cycle is zero. Zero PWM duty cycle at low speeds helps the turbine-driven generator quickly speed up on off-idle engine accelerations so that the turbine can be more efficient at extracting power from the air flow before applying any generator loading that would tend to slow it down. On the high side, the electrical power generation zone is bounded by a maximum generator speed threshold $\omega_{max}$ above which the PWM duty cycle is set to 100% to control generator overspeed excursions. Most generator speed control is achieved simply by the inherent steepness of the second- or third-order exponential electrical load applied by the load control algorithm within the electrical power generation zone, as compared to the available turbine shaft power.

Within the electrical power generation zone, the PWM % duty cycle, F, can be governed by an equation of the general form:

$$F \approx 100\% \cdot ((\omega\text{-}K)/a)^2,$$

or

$$F \approx 100\% \cdot ((\omega\text{-}K)/a)^3,$$

where $K$ and $a$ are non-zero constants that are selected based on the needs of a particular application. More generally, $F$ can be proportional to $((\omega\text{-}K)/a)^n$ where $n$ is an integer or non-integer number greater than 1. Thus, for example, $n$ can equal 1.8, or 2, or 2.33, or 3, etc.

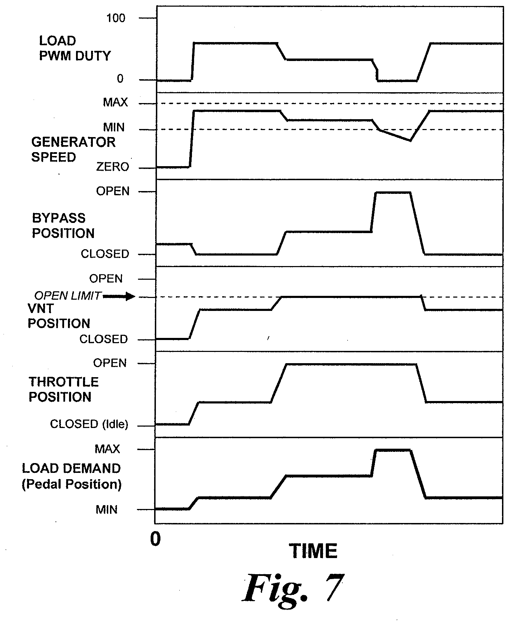

FIG. 7 illustrates an exemplary load demand scenario that will be used to aid the explanation of many of the TLR system valve and load control algorithms to be discussed below. As indicated by the Load Demand at the bottom of the diagram, beginning at Time = 0, the engine is shown idling, followed by an off-idle transition to a low-load pedal position typical of highway cruise, followed by another transition to a mid-load setting, followed by another transition to the full-load setting (known as Wide Open Throttle, or WOT), followed by a deceleration transition back to the low-load pedal position typical for highway cruise. The corresponding positions for the throttle, VNT, and bypass valves, as well as generator speed and the PWM duty, are shown in solid lines.

### VNT Open Vane Angle Limit

As indicated in FIG. 7, the TLR systems using a VNT turbine that execute air flow control through regulation of the vane angles of the VNT nozzle mechanism may have the maximum flow vane angle limited to a less-than-fully-open value in order to prevent a turbine efficiency drop-off related to vane angularity.

### TLR System Deactivated

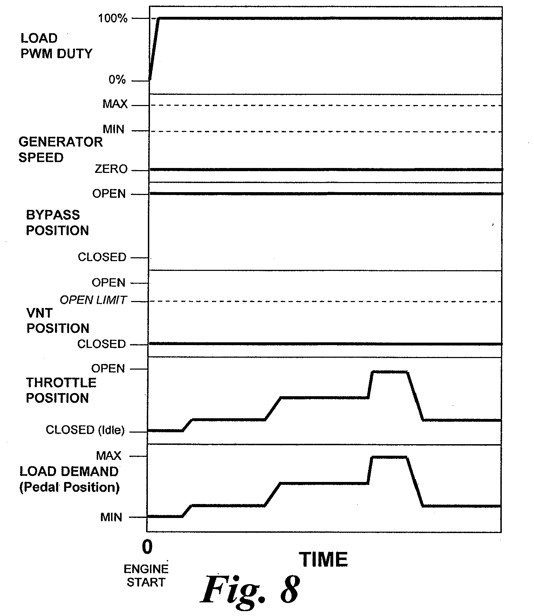

There are times when it is desired to deactivate the TLR system. With reference to FIGS. 1, 2, and 8, when the system includes a high-leakage VNT (such as in FIGS. 1 and 2), the VNT **110** is fully closed when the TLR system **100** is deactivated. It is advantageous to set the PWM duty to maximum (100%) to act as a brake on the generator **120**. The bypass valve **160** is opened sufficiently so as not to have a significant pressure drop across it. Engine air flow control for all operating conditions is handled by the series throttle valve **170**. The bottom Load Demand line in FIG. 8 shows the pedal position and the other lines show the corresponding positions of the throttle valve, VNT, and bypass valve, as well as the generator speed and PWM duty.

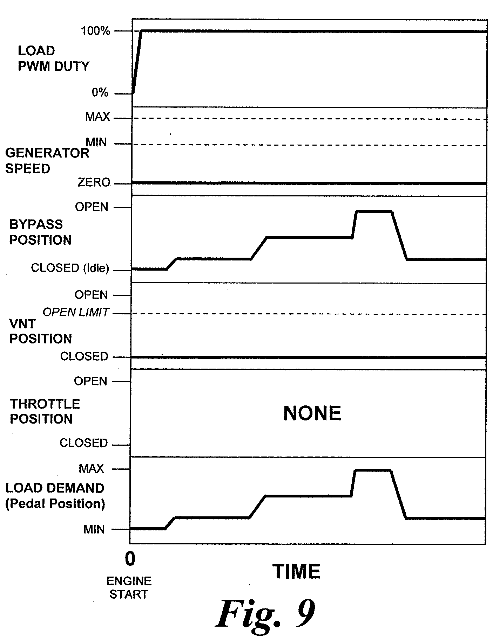

With reference to FIGS. 3 and 9, when the TLR system employs a low-leakage VNT (such as in FIG. 3), when the TLR system is deactivated the VNT **210** is fully closed. Load control PWM duty is set to maximum (100%) to act as a brake on the generator **220**. Engine air flow control for all operating conditions is handled by the bypass valve **260**. The bottom Load Demand line in FIG. 9 shows the pedal position and the others lines show the corresponding positions of the throttle valve, VNT, and bypass valve, as well as the generator speed and PWM duty.

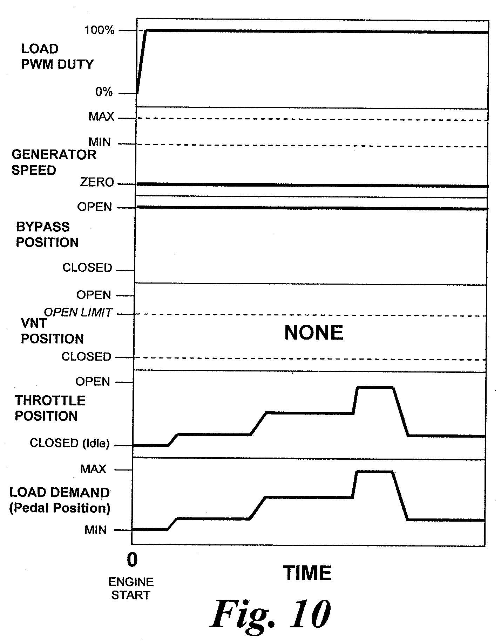

With reference to FIGS. 4, 5, and 10, when the TLR system employs a free-floating turbine (such as in FIGS. 4 and 5) and the TLR system is deactivated, the load control PWM duty is set to maximum (100%) to act as a brake on the generator **320**, and the bypass valve **360** is opened sufficiently so as not to have a significant pressure drop across it. Engine air flow control for all operating conditions is handled by the series throttle valve **370**. The bottom Load Demand line in FIG. 10 shows the pedal position and the other lines show the corresponding positions of the throttle valve and bypass valve, as well as the generator speed and PWM duty.

### TLR System Activated: High-Leakage VNT

The following is a summary of the valve and load control methodology used when the TLR system is active and uses a VNT mechanism with a closed air leakage rate that exceeds what is necessary to adequately control engine idle speed.

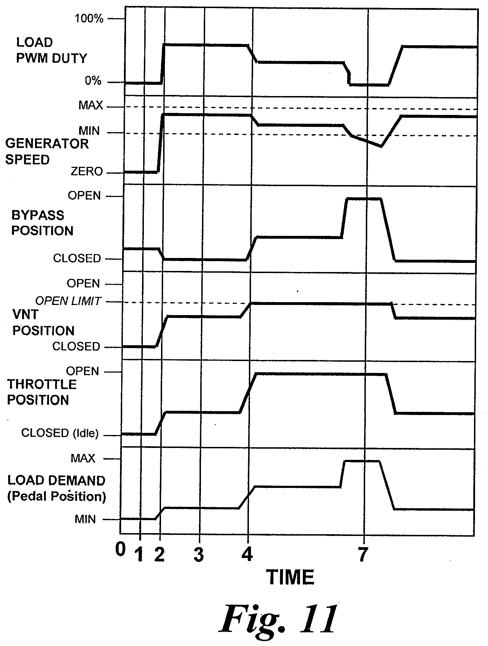

With reference to FIG. 11, the state of the TLR system at an engine idle condition (TIME = 1) is shown for a system such as shown in FIGS. 1 and 2. The VNT **110** is fully closed. Idle speed control is accomplished by closing the series throttle valve **170** to achieve the required idle air flow setting. To achieve a good idle characteristic, the bypass valve **160** is partially opened to apply either near atmospheric pressure in front of the throttle on systems with a downstream series throttle (FIG. 1), or close to the intake manifold vacuum behind the throttle on systems with an upstream series throttle (FIG. 2). The load control PWM duty is zero if generator speed is below the minimum speed threshold $\omega_{min}$ for electrical power production.

With further reference to FIG. 11, the state of the TLR system at an off-idle transition (TIME = 2) is shown for the high-leakage VNT system. Starting from the fully closed position, the VNT is moved partway toward the fully open position and simultaneously the bypass valve is moved from an initial partially open position toward the closed position. The VNT and bypass valve are moved at rates such that net air flow through both increases to meet the engine air flow demand. The series throttle valve is simultaneously opened at a higher rate than net airflow so as not to create a significant pressure drop across it. The load control PWM duty is zero until the minimum generator speed threshold $\omega_{min}$ for electrical power production is exceeded, then the PWM duty is increased exponentially with respect to increasing generator speed in such a manner that one or more power generation targets within the electrical power generation zone are achieved. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 3 in FIG. 11, a low load cruise with a high-leakage VNT system is shown. The VNT position is adjusted so air flow through it meets engine air flow demand. The bypass valve is closed. The series throttle valve is opened sufficiently so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 4 in FIG. 11, a transition to medium or high load with a high-leakage VNT system is shown. The VNT and bypass valve are opened at rates such that net air flow through both increases to meet engine airflow demand. The maximum opening limit of the VNT's nozzle mechanism is defined in accordance with turbine efficiency drop-off considerations. The bypass valve starts to open prior to the VNT reaching its maximum open limit, so as to create a smooth transition in air flow. The series throttle valve is simultaneously opened at a higher rate than net airflow so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 7 in FIG. 11, a wide-open-throttle (WOT) condition with a high-leakage VNT system is shown. The VNT is opened to its maximum open limit defined by turbine efficiency drop-off considerations. The bypass valve is opened sufficiently to meet WOT engine air flow demand. The series throttle valve is opened sufficiently so as not to create a significant pressure drop across it. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes the PWM duty to go to 100% as a secondary overspeed control. The PWM duty is set to zero if generator speed drops below the minimum speed threshold for electrical power production.

TLR System Activated: Low-Leakage VNT

The following is a summary of the valve and load control methodology used when the TLR system is active and uses a VNT mechanism with a closed air leakage rate low enough to adequately control engine idle speed.

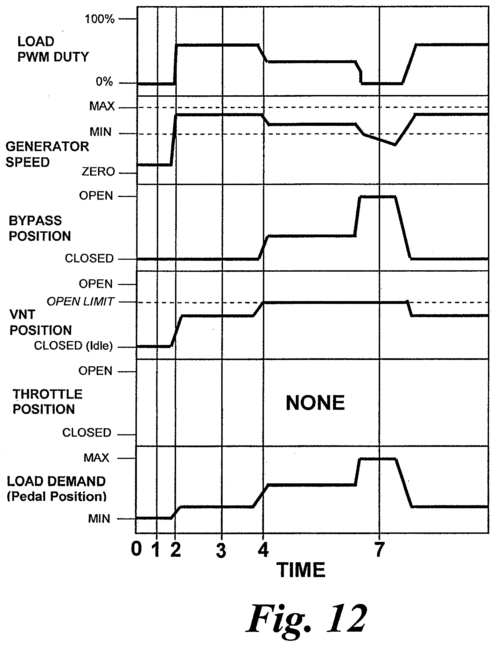

With reference to FIG. 12, the state of the TLR system at an engine idle condition (TIME = 1) is shown for a system with a low-leakage VNT such as shown in FIG. 3. Idle speed control is obtained by closing the VNT 210 to achieve the idle airflow setting. The bypass valve 260 is fully closed. The load control PWM duty is zero if generator speed is below the minimum speed threshold for electrical power production.

At TIME = 2 in FIG. 12, an off-idle transition with the low-leakage VNT system is shown. The VNT is opened at a rate such that air flow through it increases to meet engine air flow demand. The bypass valve remains fully closed. The load control PWM duty is zero until the minimum generator speed threshold for electrical power production is exceeded, then the PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 12, a low load cruise with a low-leakage VNT system is shown. The VNT position is adjusted so air flow through it meets engine air flow demand. The bypass valve remains fully closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 4 in FIG. 12, a transition to medium or high load with a low-leakage VNT system is shown. The VNT and bypass valve are opened at rates such that net air flow through both increases to meet engine airflow demand. The maximum opening limit of a swing-vane type VNT is defined by turbine efficiency drop-off considerations. The bypass valve starts to open prior to the VNT reaching maximum open limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 7 in FIG. 12, a wide-open-throttle (WOT) condition with a low-leakage VNT system is shown. The swing-vane VNT is opened to its maximum open limit defined by turbine efficiency drop-off considerations. The bypass valve is opened sufficiently to meet WOT engine air flow demand. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as secondary overspeed control.

TLR System Activated: Free-Floating Turbine

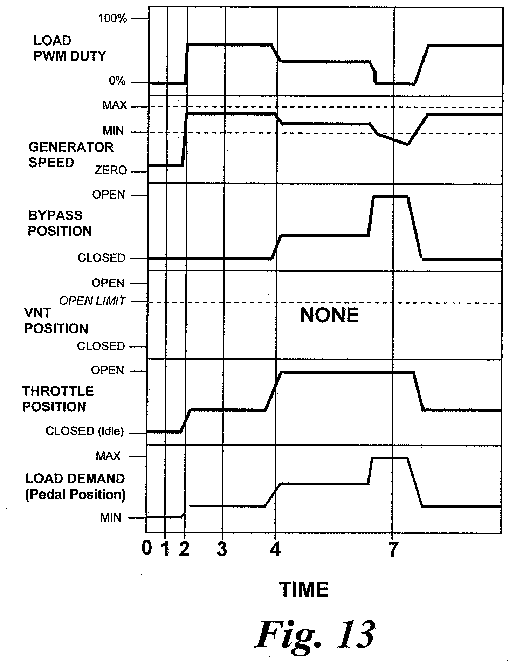

With reference to FIG. 13, the state of the TLR system at an engine idle condition (TIME = 1) is shown for a system with a free-floating turbine such as shown in FIGS. 4 and 5. Idle speed control is obtained by closing the series throttle valve **370** to achieve the required idle air flow setting. Typically there is sufficient air flow through the free-floating turbine to achieve a good idle characteristic without partially opening the bypass valve **360** to apply near atmospheric pressure in front of the throttle valve (on systems with a downstream series throttle), or near intake manifold vacuum behind the throttle valve (on systems with an upstream series throttle). The load control PWM duty is zero if generator speed is below the minimum speed threshold for electrical power production.

At TIME = 2 in FIG. 13, an off-idle transition with the free-floating turbine system is shown. The series throttle valve is opened at a rate such that air flow through it increases to meet engine airflow demand. The bypass valve is closed. The load control PWM duty is zero until the minimum generator speed threshold for electrical power production is exceeded, then PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 13, a low load cruise condition with the free-floating turbine system is shown. The series throttle valve position is adjusted so air flow through it meets engine airflow demand. The bypass valve remains closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 4 in FIG. 13, a transition to a medium or high load condition with a free-floating turbine system is shown. The series throttle valve and bypass valve are opened at rates such that net air flow through both increases to meet engine air flow demand. The bypass valve starts to open prior to the free-floating turbine reaching its choked flow limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 7 in FIG. 13, a wide-open-throttle (WOT) condition with a free-floating turbine system is shown. The bypass valve is opened sufficiently to meet WOT engine air flow demand. The series throttle valve is opened sufficiently so as not to create a significant pressure drop across it. Though little electrical power is expected, load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

Bypass Valve Control Algorithm for Improved Throttle Response

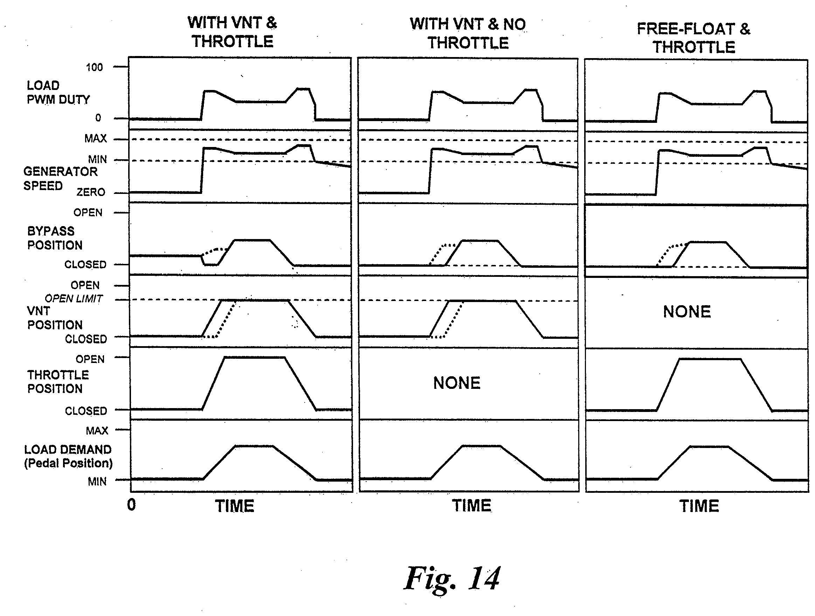

FIG. 14 illustrates a valve control algorithm that can be implemented specifically for positive-going (increasing load) engine air flow transitions (i.e., engine accelerations) that may provide improved throttle response for idle through mid-load operating modes, suitable for certain applications. This alternative algorithm consists first of rapidly opening the bypass valve and the throttle valve, if one is present, from their initial positions to more-open positions, at a rate in proportion to the commanded acceleration rate (pedal position). Next, as the rate of positive-going load demand slows, a transition is executed whereby the bypass valve closes to its normal position as the VNT opens or air flow through the free-floating turbine reaches steady-state. This algorithm can be applied to all TLR System configurations described within this disclosure.

## Algorithm for Improved Electrical Power Generation During "Fuel-Cut" Decelerations

An alternate valve control algorithm for improved electrical power generation can be implemented during decreasing airflow transitions where "fuel-cut" to the cylinders has been executed. This alternative algorithm, when triggered by the "fuel-cut" signal, consists of positioning the series throttle valve, VNT (if applicable), and bypass valve to certain optimized positions based on system characteristics for improved electrical power generation at the engine RPM condition present. Automatic transmissions, continuously variable transmissions (CVTs), and other advanced transmissions whose gear selection is electronically controlled may also be triggered to down-shift to a lower gear by this algorithm under certain conditions to increase engine RPM for improved electrical power production. The trade-off between the desired level of engine braking and electrical power production may be tailored within the algorithm by adjustment of the valve position-to-RPM and/or vehicle speed relationship. When the "fuel-cut" signal ceases, the valves first return to their normal positions based on Load Demand (pedal position) and then a signal is sent to the engine controller that it is safe to re-enable fueling. This algorithm can be applied to all TLR system configurations described within this disclosure.

## Overspeed Control Algorithm for Rapid Throttle-Lift

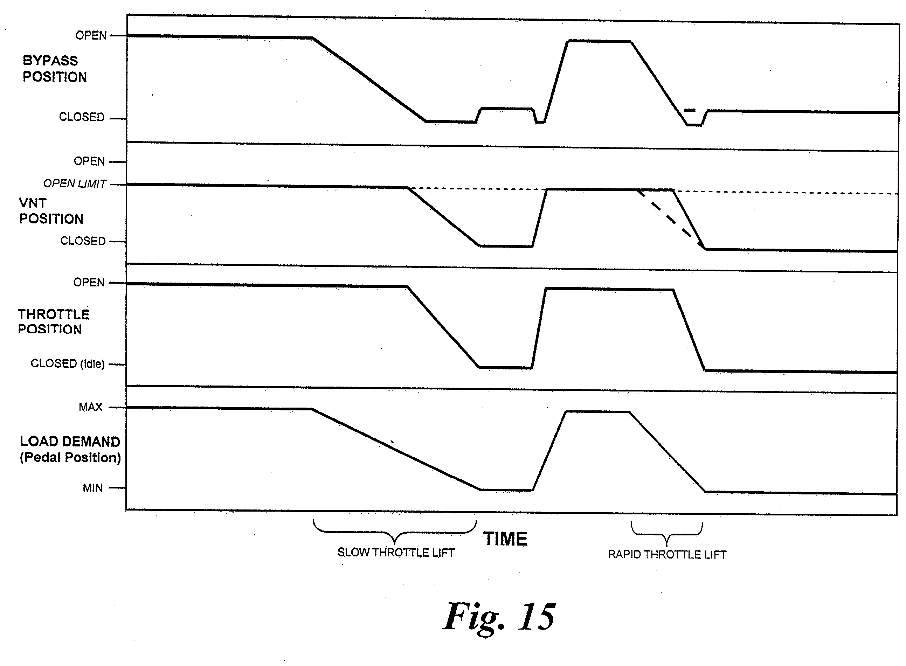

On TLR system configurations having a VNT turbine, an optional air valve-related generator overspeed control algorithm may be chosen to be executed during certain high-flow rapid throttle-lift conditions. This is illustrated in FIG. 15. To illustrate the technique, starting with the system operating at high flow near WOT, when a *slow* (i.e., at a rate lower than a predetermined rate) throttle-lift event occurs, the bypass valve begins closing first as it follows the decreasing load demand signal, followed next by closure of the VNT. However, when a high-flow *rapid* (i.e., at a rate higher than the predetermined rate) throttle-lift event occurs, the rapidly decreasing load demand signal triggers execution of the algorithm, forcing the VNT to begin closing much sooner (dashed lines) to prevent the bypass valve's air flow momentum from being forced through the VNT, possibly causing a turbine overspeed condition. Also, the bypass valve position near the idle flow setting is adjusted by the algorithm to ensure a smooth transition to idle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for controlling a throttle loss recovery (TLR) system for a spark-ignition internal combustion engine wherein the TLR system includes a turbine through which intake air passes before being delivered to the engine and an electrical generator coupled to the turbine and driven to rotate by the turbine, the method comprising the steps of:

    detecting a rotational speed $\omega$ of the generator;
    providing a rectifier, a filter, an over-voltage controller, and a pulse width modulation (PWM) controller between the generator and a load served by the generator such that AC electrical power generated by the generator is rectified and filtered into DC current, over-voltage controlled, and is supplied to the load via the PWM controller;
    predefining an electrical power generation zone bounded on one side by a predefined minimum generator speed threshold $\omega_{min}$ and on an opposite side by a predefined maximum generator speed threshold $\omega_{max}$; and
    configuring the PWM controller such that when the TLR system is activated a duty cycle of the PWM controller is equal to:

        zero when $\omega$ is less than $\omega_{min}$;
        100% when $\omega$ is greater than $\omega_{max}$; and
        $F$ when $\omega$ is within the electrical power generation zone, where $F$ is a non-linear function of $\omega$, increasing with increasing $\omega$, and is greater than zero but less than 100%.

2. The method of claim 1, wherein the PWM controller is configured to achieve at least one predefined power generation target $T_1$ within the electrical power generation zone, wherein $T_1$ is defined by a predefined % duty cycle value $F_1$ at a predefined value of speed $\omega_1$.

3. The method of claim 1, wherein the PWM controller is configured to achieve at least two predefined power generation targets $T_1$ and $T_2$ within the electrical power generation zone, wherein $T_1$ is defined by a predefined % duty cycle value $F_1$ at a predefined value of speed $\omega_1$ and $T_2$ is defined by a predefined % duty cycle value $F_2$ at a predefined value of speed $\omega_2$.

4. The method of claim 1, wherein $F$ is proportional to $\omega^n$, where $n$ is an integer or non-integer greater than 1.

**5.** The method of claim 4, wherein *n* equals 2.

**6.** The method of claim 4, wherein *n* equals 3.

**7.** The method of claim 1, wherein the TLR system further includes a bypass passage for bypassing the turbine, a bypass valve controllable to regulate flow through the bypass passage, and a throttle valve in series with the turbine for regulating flow to the engine, the method further comprising the step of deactivating the TLR system when electrical power generation is not required by:

setting the PWM controller's duty cycle to 100% so as to effectively brake the generator;
opening the bypass valve sufficiently to prevent any significant pressure drop across the bypass valve and turbine; and
controlling engine airflow by controlling the throttle valve.

**8.** The method of claim 1, wherein the TLR system further includes a bypass passage for bypassing the turbine and a bypass valve controllable to regulate flow through the bypass passage, and wherein the turbine comprises a low-leakage variable-nozzle turbine (VNT) that is controllable between fully closed and fully open positions, flow rate through the VNT at the fully closed position being less than a required engine idle air flow rate such that engine idle speed is achieved without incorporation of a throttle valve in series with the turbine for regulating air flow to the engine, the method further comprising the step of deactivating the TLR system when electrical power generation is not required by:

setting the PWM controller's duty cycle to 100% so as to effectively brake the generator;
fully closing the VNT; and
controlling engine airflow by controlling the bypass valve.

**9.** A throttle loss recovery system for a spark-ignition internal combustion engine, comprising:

a turbine through which intake air passes before being delivered to the engine;
an electrical generator coupled to the turbine and driven to rotate by the turbine; and
a generator speed detector, a rectifier, a filter, an over-voltage controller, and a pulse width modulation (PWM) controller between the generator and a load served by the generator such that AC electrical power generated by the generator is speed detected, rectified and filtered into DC current, over-voltage controlled, and is supplied to the load via the PWM controller;
wherein the PWM controller is configured such that a duty cycle of the PWM controller is equal to:

zero when generator speed $\omega$ is less than a predefined minimum generator speed threshold $\omega_{min}$;
100% when $\omega$ is greater than a predefined maximum generator speed threshold $\omega_{max}$; and
$F$ when $\omega$ is within an electrical power generation zone, wherein $F$ is a non-linear function of $\omega$, increasing with increasing $\omega$, and is greater than zero but less than 100%;

wherein the electrical power generation zone is bounded on one side by $\omega_{min}$ and on an opposite side by $\omega_{max}$.

**10.** The throttle loss recovery system of claim 9, wherein the PWM controller is configured to achieve at least one predefined power generation target $T_1$ within the electrical power generation zone, wherein $T_1$ is defined by a predefined % duty cycle value $F_1$ at a predefined value of speed $\omega_1$.

**11.** The throttle loss recovery system of claim 9, wherein the PWM controller is configured to achieve at least two predefined power generation targets $T_1$ and $T_2$ within the electrical power generation zone, wherein $T_1$ is defined by a predefined % duty cycle value $F_1$ at a predefined value of speed $\omega_1$ and $T_2$ is defined by a predefined % duty cycle value $F_2$ at a predefined value of speed $\omega_2$.

**12.** The throttle loss recovery system of claim 9, wherein $F$ is proportional to $\omega^n$, where $n$ is an integer or non-integer greater than 1.

**13.** The throttle loss recovery system of claim 12, wherein *n* equals 2.

**14.** The throttle loss recovery system of claim 12, wherein *n* equals 3.

**Patentansprüche**

**1.** Verfahren zum Steuern eines Drosselverlustwiederherstellungs(TLR)-Systems für einen Ottoverbrennungsmotor, wobei das TLR-System eine Turbine, durch die Ansaugluft geleitet wird, bevor sie dem Motor zugeführt wird, und einen elektrischen Generator, der an die Turbine gekoppelt ist und angetrieben wird, um von der Turbine gedreht zu werden, beinhaltet, wobei das Verfahren die folgenden Schritte umfasst:

Detektieren einer Drehgeschwindigkeit $\omega$ des Generators;

Bereitstellen eines Gleichrichters, eines Filters, einer Überspannungssteuerung und einer Pulsweitenmodulations(PWM)-Steuerung zwischen dem Generator und einer Last, die vom Generator bedient wird, derart, dass eine elektrische AC-Leistung, die vom Generator erzeugt wird, in DC-Strom gleichgerichtet und gefiltert, überspannungsgesteuert und via die PWM-Steuerung zur Last geliefert wird;

Vordefinieren eines elektrischen Leistungserzeugungsbereichs, der auf einer Seite durch einen vordefinierten Generatormindestdrehzahlschwellwert $\omega_{min}$ und auf einer gegenüberliegenden Seite durch einen vordefinierten Generatorhöchstdrehzahlschwellwert $\omega_{max}$ begrenzt ist; und

Auslegen der PWM-Steuerung derart, dass, wenn das TLR-System aktiviert ist, ein Arbeitszyklus der PWM-Steuerung gleich Folgendem ist:

null, wenn $\omega$ kleiner als $\omega_{min}$ ist;
100 %, wenn $\omega$ größer als $\omega_{max}$ ist, und
$F$, wenn $\omega$ im elektrischen Leistungserzeugungsbereich liegt, wo $F$ eine nichtlineare Funktion von $\omega$ ist, die mit zunehmender $\omega$ zunimmt, und größer als null und kleiner als 100 % ist.

2. Verfahren nach Anspruch 1, wobei die PWM-Steuerung dazu ausgelegt ist, mindestens ein vordefiniertes Leistungserzeugungsziel $T_1$ im elektrischen Leistungserzeugungsbereich zu erreichen, wobei $T_1$ durch einen vordefinierten %-Arbeitszykluswert $F_1$ bei einem vordefinierten Wert einer Drehzahl $\omega_1$ definiert ist.

3. Verfahren nach Anspruch 1, wobei die PWM-Steuerung dazu ausgelegt ist, mindestens zwei vordefinierte Leistungserzeugungsziele $T_1$ und $T_2$ im elektrischen Leistungserzeugungsbereich zu erreichen, wobei $T_1$ durch einen vordefinierten %-Arbeitszykluswert $F_1$ bei einem vordefinierten Wert einer Drehzahl $\omega_1$ definiert ist und $T_2$ durch einen vordefinierten %-Arbeitszykluswert $F_2$ bei einem vordefinierten Wert einer Drehzahl $\omega_2$ definiert ist.

4. Verfahren nach Anspruch 1, wobei $F$ proportional zu $\omega^n$ ist, wo $n$ eine Ganzzahl oder eine Nichtganzzahl größer als 1 ist.

5. Verfahren nach Anspruch 4, wobei $n$ gleich 2 ist.

6. Verfahren nach Anspruch 4, wobei $n$ gleich 3 ist.

7. Verfahren nach Anspruch 1, wobei das TLR-System ferner einen Bypasskanal zum Umgehen der Turbine, ein Bypassventil, das steuerbar ist, einen Strom durch den Bypasskanal zu regeln, und ein Drosselventil in der Reihe mit der Turbine zum Regeln eines Stroms zum Motor beinhaltet, wobei das Verfahren ferner den Schritt des Deaktivierens des TLR-Systems, wenn eine elektrische Leistungserzeugung nicht erforderlich ist, durch Folgendes umfasst:

Einstellen des Arbeitszyklus der PWM-Steuerung auf 100 %, um den Generator effektiv zu bremsen;
ausreichendes Öffnen des Bypassventils, um einen deutlichen Druckabfall über das Bypassventil und die Turbine zu verhindern; und
Steuern des Motorluftstroms durch Steuern des Drosselventils.

8. Verfahren nach Anspruch 1, wobei das TLR-System ferner einen Bypasskanal zum Umgehen der Turbine und ein Bypassventil, das steuerbar ist, einen Strom durch den Bypasskanal zu regeln, beinhaltet und wobei die Turbine eine Turbine mit variabler Düse (VNT) und geringer Leckage umfasst, die zwischen einer vollständig geschlossenen und einer vollständig geöffneten Position steuerbar ist, wobei eine Strömungsrate durch den VNT in der vollständig geschlossenen Position kleiner ist als eine erforderliche Motorleerlaufluftströmungsrate, derart dass eine Motorleerlaufdrehzahl ohne Einbindung eines Drosselventils in Reihe mit der Turbine zum Regeln eines Stroms zum Motor erreicht wird, wobei das Verfahren ferner den Schritt des Deaktivierens des TLR-Systems, wenn eine elektrische Leistungserzeugung nicht erforderlich ist, durch Folgendes umfasst:

Einstellen des Arbeitszyklus der PWM-Steuerung auf 100 %, um den Generator effektiv zu bremsen;
vollständiges Schließen des VNT und
Steuern des Motorluftstroms durch Steuern des Bypassventils.

9. Drosselverlustwiederherstellungssystem für einen Ottoverbrennungsmotor, das Folgendes umfasst:

eine Turbine, durch die Ansaugluft geleitet wird, bevor sie dem Motor zugeführt wird;
einen elektrischen Generator, der an die Turbine gekoppelt ist und angetrieben wird, um von der Turbine gedreht zu werden; und
einen Generatordrehzahldetektor, einen Gleichrichter, einen Filter, eine Überspannungssteuerung und eine Pulsweitenmodulations(PWM)-Steuerung zwischen dem Generator und einer Last, die vom Generator bedient wird, derart, dass eine elektrische AC-Leistung, die vom Generator erzeugt wird, drehzahldetektiert, in DC-Strom gleichgerichtet und gefiltert, überspannungsgesteuert und via die PWM-Steuerung zur Last geliefert wird;

wobei die PWM-Steuerung derart ausgelegt ist, dass ein Arbeitszyklus der PWM-Steuerung gleich Folgendem ist:

null, wenn eine Generatordrehzahl $\omega$ kleiner als ein vordefinierter Generatormindestdrehzahlschwellwert $\omega_{min}$ ist;

100 %, wenn $\omega$ größer als ein vordefinierter Generatorhöchstdrehzahlschwellwert $\omega_{max}$ ist, und

$F$, wenn $\omega$ in einem elektrischen Leistungserzeugungsbereich liegt, wobei $F$ eine nichtlineare Funktion von $\omega$ ist, die mit zunehmender $\omega$ zunimmt, und größer als null und kleiner als 100 % ist;

wobei der elektrische Leistungserzeugungsbereich auf einer Seite durch $\omega_{min}$ und auf einer gegenüberliegenden Seite durch $\omega_{max}$ begrenzt ist.

10. Drosselverlustwiederherstellungssystem nach Anspruch 9, wobei die PWM-Steuerung dazu ausgelegt ist, mindestens ein vordefiniertes Leistungserzeugungsziel $T_1$ im elektrischen Leistungserzeugungsbereich zu erreichen, wobei $T_1$ durch einen vordefinierten %-Arbeitszykluswert $F_1$ bei einem vordefinierten Wert einer Drehzahl $\omega_1$ definiert ist.

11. Drosselverlustwiederherstellungssystem nach Anspruch 9, wobei die PWM-Steuerung dazu ausgelegt ist, mindestens zwei vordefinierte Leistungserzeugungsziele $T_1$ und $T_2$ im elektrischen Leistungserzeugungsbereich zu erreichen, wobei $T_1$ durch einen vordefinierten %-Arbeitszykluswert $F_1$ bei einem vordefinierten Wert einer Drehzahl $\omega_1$ definiert ist und $T_2$ durch einen vordefinierten %-Arbeitszykluswert $F_2$ bei einem vordefinierten Wert einer Drehzahl $\omega_2$ definiert ist.

12. Drosselverlustwiederherstellungssystem nach Anspruch 9, wobei F proportional zu $\omega^n$ ist, wo $n$ eine Ganzzahl oder eine Nichtganzzahl größer als 1 ist.

13. Drosselverlustwiederherstellungssystem nach Anspruch 12, wobei $n$ gleich 2 ist.

14. Drosselverlustwiederherstellungssystem nach Anspruch 12, wobei $n$ gleich 3 ist.

## Revendications

1. Procédé de commande d'un système de récupération de pertes d'énergie dues au papillon des gaz (TLR) pour un moteur à combustion interne à étincelles, dans lequel le système TLR comprend une turbine traversée par de l'air d'admission avant qu'il soit amené au moteur et un générateur électrique couplé à la turbine et entraîné en rotation par la turbine, le procédé comprenant les étapes consistant à :

détecter une vitesse de rotation $\omega$ du générateur ;

fournir un redresseur, un filtre, un contrôleur de surtension et un contrôleur de modulation de largeur d'impulsion (PWM) entre le générateur et une charge desservie par le générateur de sorte que l'énergie électrique CA générée par le générateur est redressée et filtrée en CC, contrôlée contre la surtension, et est fournie à la charge par l'intermédiaire du contrôleur PWM ;

prédéfinir une zone de génération d'énergie électrique délimitée d'un côté par un seuil minimum prédéfini de vitesse de générateur $\omega_{min}$ et de l'autre côté par un seuil maximum prédéfini de vitesse de générateur $\omega_{max}$ ; et

configurer le contrôleur PWM de telle sorte que lorsque le système TLR est activé, le rapport cyclique du contrôleur PWM est égal à :

zéro lorsque $\omega$ est inférieure à $\omega_{min}$, 100% lorsque $\omega$ est supérieure à $\omega_{max}$ ; et F lorsque $\omega$ se trouve dans la zone de génération d'énergie électrique, où F est une fonction non linéaire de $\omega$, qui augmente avec l'augmentation de $\omega$, et est supérieure à zéro mais inférieure à 100%.

2. Procédé selon la revendication 1, dans lequel le contrôleur PWM est configuré pour atteindre au moins une cible prédéfinie de génération d'énergie $T_1$ dans la zone de génération d'énergie électrique, dans lequel $T_1$ est définie par une valeur prédéfinie de rapport cyclique $F_1$ en % à une valeur prédéfinie de vitesse $\omega_1$.

3. Procédé selon la revendication 1, dans lequel le contrôleur PWM est configuré pour atteindre au moins deux cibles prédéfinies de génération d'énergie $T_1$ et $T_2$ dans la zone de génération d'énergie électrique, dans lequel $T_1$ est définie par une valeur prédéfinie de rapport cyclique $F_1$ en % à une valeur prédéfinie de vitesse $\omega_1$ et $T_2$ est définie par une valeur prédéfinie $F_2$ en % à une valeur prédéfinie de vitesse $\omega_2$.

4. Procédé selon la revendication 1, dans lequel F est proportionnel à $\omega^n$, où n est un nombre entier ou non entier supérieur à 1.

5. Procédé selon la revendication 4, dans lequel n est égal à 2.

6. Procédé selon la revendication 4, dans lequel n est égal à 3.

7. Procédé selon la revendication 1, dans lequel le système TLR comprend en outre un passage de dérivation pour contourner la turbine, une soupape de dérivation pouvant être commandée pour réguler l'écoulement à travers le passage de dérivation, et un papillon des gaz en série avec la turbine pour réguler l'écoulement vers le moteur, le procédé comprenant en outre l'étape consistant à désactiver le système TLR lorsqu'aucune génération d'énergie électrique n'est requise par:

le réglage du rapport cyclique du contrôleur PWM à 100% afin de freiner efficacement le générateur;
l'ouverture suffisante de la soupape de dérivation pour empêcher toute chute de pression importante dans la soupape de dérivation et la turbine; et
la régulation de l'écoulement d'air du moteur par la commande du papillon des gaz.

8. Procédé selon la revendication 1, dans lequel le système TLR comprend en outre un passage de dérivation pour contourner la turbine et une soupape de dérivation pouvant être commandée pour réguler l'écoulement à travers le passage de dérivation, et dans lequel la turbine comprend une turbine à buse variable (VNT) à faible fuite qui peut être commandée entre des positions complètement fermée et complètement ouverte, l'écoulement à travers la VNT en position complètement fermée étant inférieur à un débit d'air requis de ralenti du moteur, de sorte que le régime de ralenti du moteur est atteint sans incorporation d'un papillon des gaz en série avec la turbine pour réguler l'écoulement d'air vers le moteur, le procédé comprenant en outre l'étape de désactivation du système TLR lorsque la génération d'énergie électrique n'est pas requise par:

le réglage du rapport cyclique du contrôleur PWM à 100% afin de freiner efficacement le générateur;
la fermeture complète de la VNT; et
la régulation du débit d'air du moteur par la commande de la soupape de dérivation.

9. Système de récupération de pertes d'énergie dues au papillon des gaz pour un moteur à combustion interne à étincelles, comprenant:

une turbine traversée par de l'air d'admission avant qu'il soit amené au moteur;
un générateur électrique couplé à la turbine et entraîné en rotation par la turbine; et
un détecteur de vitesse de générateur, un redresseur, un filtre, un contrôleur de surtension et un contrôleur de modulation de largeur d'impulsion (PWM) entre le générateur et une charge desservie par le générateur de sorte que l'énergie électrique CA produite par le générateur est détectée, redressée et filtrée en CC, contrôlée contre la surtension, et est fournie à la charge par le contrôleur PWM;
le contrôleur PWM étant configuré de telle sorte qu'un rapport cyclique du contrôleur PWM est égal à:

zéro lorsque la vitesse du générateur $\omega$ est inférieure à un seuil minimum prédéfini de vitesse de générateur $\omega_{min}$;
100% lorsque $\omega$ est supérieure à un seuil maximum prédéfini de vitesse de générateur $\omega_{max}$; et
F lorsque $\omega$ se trouve dans une zone de génération d'énergie électrique, où F est une fonction non linéaire de $\omega$, qui augmente avec l'augmentation de $\omega$, et est supérieure à zéro mais inférieure à 100%;

la zone de génération d'énergie électrique étant délimitée d'un côté par $\omega_{min}$ et d'un côté opposé par $\omega_{max}$.

10. Système de récupération de pertes d'énergie dues au papillon des gaz selon la revendication 9, dans lequel le contrôleur PWM est configuré pour atteindre au moins une cible prédéfinie de génération d'énergie $T_1$ dans la zone de génération d'énergie électrique, dans lequel $T_1$ est définie par une valeur prédéfinie de rapport cyclique $F_1$ en % à une valeur prédéfinie de vitesse $\omega_1$.

11. Système de récupération de pertes d'énergie dues au papillon des gaz selon la revendication 9, dans lequel le contrôleur PWM est configuré pour atteindre au moins deux cibles prédéfinies de génération d'énergie $T_1$ et $T_2$ dans la zone de génération d'énergie électrique, dans lequel $T_1$ est définie par une valeur prédéfinie de rapport cyclique $F_1$ en % à une valeur prédéfinie de vitesse $\omega_1$ et $T_2$ est définie par une valeur prédéfinie de rapport cyclique $F_2$ en % à une valeur prédéfinie de vitesse $\omega_2$.

12. Système de récupération de pertes d'énergie dues au papillon des gaz selon la revendication 9, dans lequel F est proportionnel à $\omega^n$, où n est un nombre entier ou non entier supérieur à 1.

**EP 2 580 441 B1**

**13.** Système de récupération de pertes d'énergie dues au papillon des gaz selon la revendication 12, où n est égal à 2.

**14.** Système de récupération de pertes d'énergie dues au papillon des gaz selon la revendication 12, où n est égal à 3.

**Fig. 1**

**Fig. 2**

*Fig. 3*

300

330

340

180

320

325

310

A

360    350

370

E

I

**Fig. 4**

300

330

340

180

320

325

310

A

370    360    350

E

I

**Fig. 5**

**Fig. 6**

*Fig. 7*

*Fig. 8*

**Fig. 9**

*Fig. 10*

*Fig. 11*

**Fig. 12**

**TIME**

*Fig. 13*

*Fig. 14*

*Fig. 15*

**EP 2 580 441 B1**

**REFERENCES CITED IN THE DESCRIPTION**

**Patent documents cited in the description**

- US 5394848 A
- EP 1462629 A1
- EP 2083154 A1
- WO 9604487 A1